# EUROPEAN PATENT APPLICATION

(11) **EP 3 435 109 A1**
(43) Date of publication of application: **30.01.2019**
(21) Application number: 17183625.7
(22) Date of filing: 27.07.2017
(51) Int. Cl.: G01S 5/02, H04N 5/44

(54) **AN APPARATUS AND METHOD FOR DISPLAYING LOCATION OF AN OBJECT**

(71) Applicant: Vestel Elektronik Sanayi ve Ticaret A.S., 45030 Manisa (TR)
(72) Inventor: SARIARSLAN,, Muhammet Kürsat, 45030 Manisa (TR)
(74) Representative: Flint, Adam

(57) **Abstract**

An apparatus (106) displays an image identifying the location of an object (102) in an environment (100). The apparatus (106) has a plurality of signal receivers (104) for receiving a wireless signal transmitted by an object (102) and a display screen (108) for displaying images. The wireless signal received by the plurality of signal receivers (104) is analysed to determine the location of the object (102) in the environment (100). A representation of the environment (100) with an indication of the location of the object (102) in the environment (100) is caused to be displayed on the screen (108).

## Description

### Technical Field

The present disclosure relates to an apparatus and method for displaying an image identifying the location of an object in an environment.

### Background

The problem of misplaced possessions is well known. In the example of a misplaced phone, the phone can be called using a second phone. The ringtone can be followed by the user as a guide to locate the misplaced phone. This method, however, can only be used for objects which can be triggered to make a noise. It also relies on various constraints, such as the misplaced object being able to make a noise which can be heard by the user.

### Summary

According to a first aspect disclosed herein, there is provided an apparatus for displaying an image identifying the location of an object in an environment, the apparatus comprising:
a plurality of signal receivers for receiving a wireless signal transmitted by an object;
a display screen for displaying images; and
a processor, the processor being constructed and arranged to:
   analyse the wireless signal received by the plurality of signal receivers to determine the location of the object in the environment; and
   cause display on the screen of a representation of the environment with an indication of the location of the object in the environment.

In an example, the apparatus comprises at least three signal receivers.

In an example, the processor is configured to cause display on the screen of distance information of the object from the screen.

In an example, the apparatus comprises data storage in which a photograph of the environment is stored for use as the representation of the environment.

In an example, the apparatus comprising a camera arranged to take at least one photograph of the environment for use as the representation of the environment.

The photograph may be taken at a time when the apparatus is first set up, and/or in response to receive a request to locate a said object, and/or in response to receiving a said wireless signal by one or more of the plurality of signal receivers.

In an example, the apparatus comprises a transmitter arranged to transmit a trigger signal to a said object to cause said object to transmit the wireless signal for receipt by the plurality of receivers.

In an example, the apparatus comprises a television set.

According to a second aspect disclosed herein, there is provided a method for displaying an image identifying the location of an object in an environment, the method comprising:
receiving, at a plurality of receivers, at least one wireless signal transmitted by an object;
analysing the wireless signal received by the plurality of signal receivers to determine the location of the object in the environment; and
displaying a representation of the environment with an indication of the location of the object in the environment.

In an example, the method comprises displaying distance information of the object on a screen on which the representation of the environment is displayed from the screen.

In an example comprises storing a photograph of the environment for use as the representation of the environment.

In an example, the method comprises taking at least one photograph of the environment for use as the representation of the environment, the photograph being taken at a time of at least one of when the apparatus is set up, a request is received to locate an object, or a wireless signal is received by the plurality of signal receivers.

In an example, the method comprises transmitting a trigger signal to the object, the trigger signal causing the object to transmit the wireless signal.

In an example, the method is carried out by an apparatus comprising a television set.

### Brief Description of the Drawings

To assist understanding of the present disclosure and to show how embodiments may be put into effect, reference is made by way of example to the accompanying drawings in which:
Figure 1 shows schematically a first environment in which the location of a misplaced object is to be displayed;
Figure 2 shows schematically a perspective view of the first environment in which the location of a misplaced object is to be displayed;
Figure 3 shows schematically an example method for calculating the location of a misplaced object;
Figure 4 shows schematically a second environment in which the location of a misplaced object is to be displayed; and
Figure 5 shows schematically a perspective view of the second environment in which the location of a misplaced object is to be displayed.

### Detailed Description

As mentioned previously, methods of locating misplaced objects are often inaccurate and rely on various constraints that are not always convenient. An example method in the case of a misplaced phone is to call the misplaced phone from another phone. The misplaced phone will ring if it is arranged to receive the call and output an audible ringtone. This requires the presence of a second phone, for the misplaced phone to be set to 'loud' (not on 'silent') and to have access to a phone network. Such methods are not suitable for other objects, such as remote controllers for televisions and other domestic appliances. More generally, methods for detecting misplaced devices rely on a large number of constraints, which may not always be convenient or suitable. Therefore, it is advantageous to have an apparatus and method for displaying the location of a misplaced object to a user.

According to examples described herein, there is provided an apparatus for displaying an image identifying the location of a misplaced object in an environment. The apparatus comprises a plurality of signal receivers for receiving a wireless signal transmitted by an object. The apparatus comprises a display screen for displaying images and a processor. The processor analyses the wireless signal received by the plurality of signal receivers to determine the location of the object in the environment. It also causes a representation of the environment with an indication of the location of the object in the environment to display on the screen.

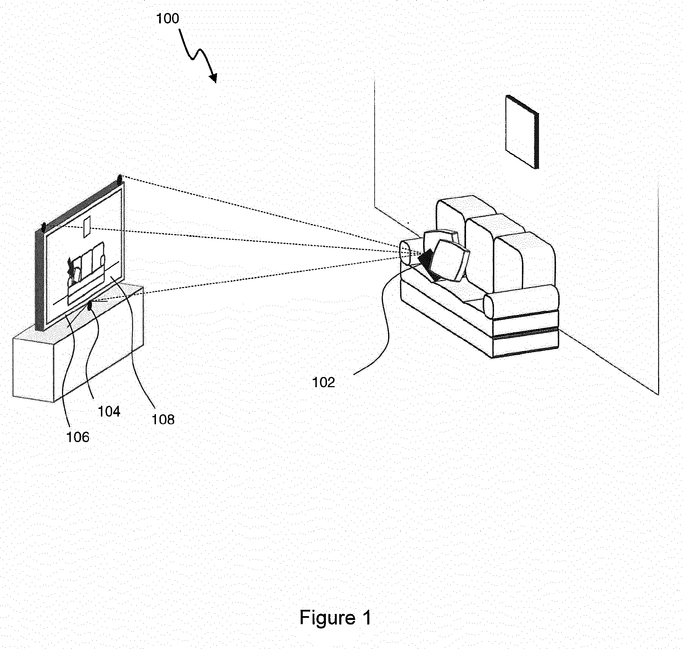

Figure 1 schematically shows an example environment 100 in which an object 102 has been misplaced. Object 102 transmits a wireless signal. The wireless signal is received by a plurality of receivers 104. The plurality of receivers 104 use the received wireless signals to locate the object 102 in the environment 100. The apparatus 106 comprises a screen 108. The screen 108 is caused to display a representation of the environment 100, and an indication of the location of the misplaced object 102.

The object 102 transmits a wireless signal for detection, which is received by the receivers 104. The receivers 104 can be provided integrally with the apparatus 106 or as separate components which are in communication with a processor of the apparatus 106. The processor is arranged to analyse the wireless signal received by the receivers 104 in order to locate the misplaced object 102.

The apparatus 106 may be arranged to take at least one photograph of the environment 100. The photograph may be taken at a time when the apparatus 106 is first set up. Additionally or alternatively, the photograph may be taken at a time when a request is received to locate the misplaced object 102. Additionally or alternatively, the photograph may be taken when the wireless signal is received by the plurality of signal receivers 104.

In this example the apparatus 106 is a television set. However, the apparatus 106 may additionally or alternatively comprise other components. The apparatus 106 may in another embodiment be a computer with a display screen, such as a personal computer, tablet or smartphone, with an integral or separate display. In the case of a separate display, the display screen may be connected physically or wirelessly to the personal computer, tablet, smartphone or similar such device.

The plurality of receivers 104 use the received wireless signals to locate the object 102 in the environment 100. The screen 108 is caused to display a representation of the environment 100, and an indication of the location of the misplaced object 102 within the environment 100.

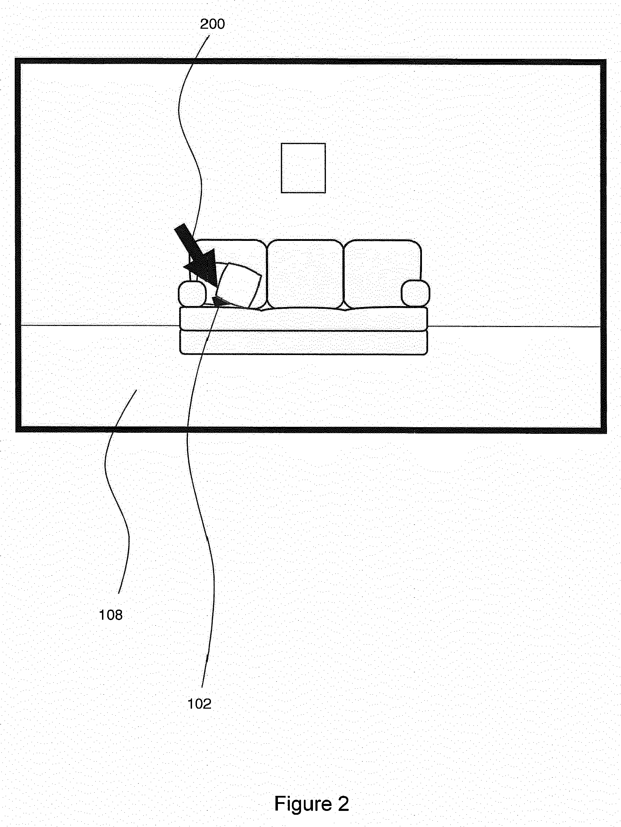

Figure 2 shows an example of a display provided by the screen 108 of Figure 1 to determine the location of the misplace object 102. The screen 108 displays a photograph of the environment 100 in which the object 102 has been misplaced. The screen 108 is arranged to display the photograph, alongside an indicator 200 for indicating where the missing object 102 is located in the environment 100. The indicator 200 is shown as an arrow. However, it may take another form and/or be animated. Moreover, as an alternative to a photograph, some other visual representation of the environment 100 may be used, such as a simpler block or line representation of the environment 100.

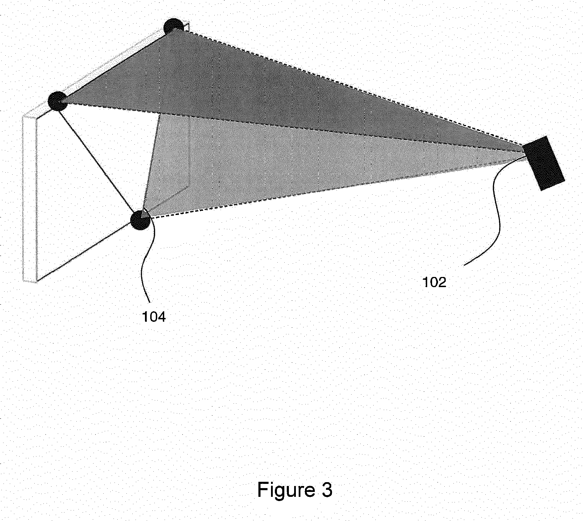

A plurality of receivers 108 are used to accurately detect the location of an object. In one specific example, at least three receivers are used in order to triangulate the location of a wireless signal-emitting object. The apparatus 100 determines the position of an object 102 relative to the receivers 108, which are located at known locations in the environment. Figure 3 shows schematically how the receivers 104 of the environment 100 in Figure 1 triangulate a wireless signal received from the misplaced object 102. Using known distances between the receivers 104 and the received wireless signal from the misplaced object received at the receivers 104, the distance between the receivers 104 and the object 102 can be calculated, enabling the location of the object 102 in 3D space to be identified using geometric rules known in the art.

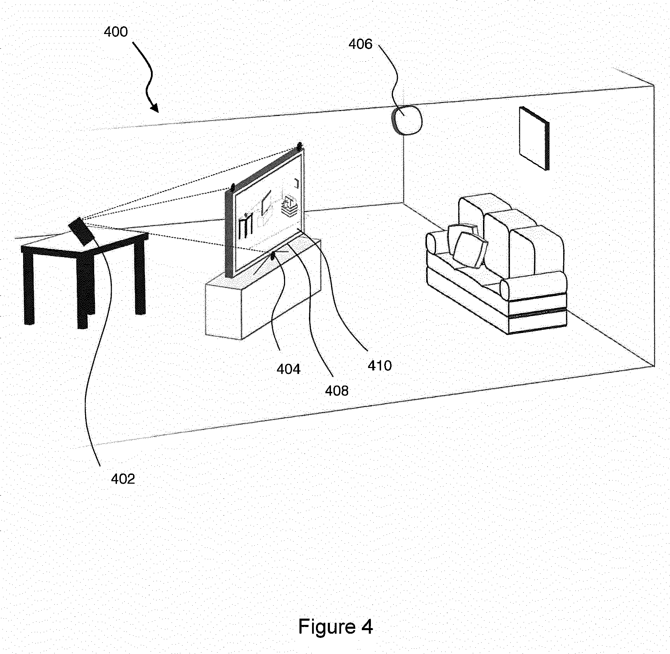

Figure 4 schematically shows another example environment 400 in which an object 402 has been misplaced. An apparatus comprises a plurality of receivers 404, a camera 406 and a television set 408. The camera 406 is arranged to take at least one photograph of the environment 400. The photograph may be taken at a time when the apparatus is first set up. Additionally or alternatively, the photograph may be taken at a time when a request is received to locate the misplaced object 402. Additionally or alternatively, the photograph may be taken when the wireless signal is received by the plurality of signal receivers 404. The camera is arranged to wirelessly communicate the photograph to the television set 408.

Object 402 transmits a wireless signal. The wireless signal is received by the receivers 404. The receivers 104 can be provided integrally with the television set 408 or as separate components which are in communication with a processor of the television set 408. The processor is arranged to analyse the wireless signal received by the receivers in order to locate the misplaced object 402. The television set 408 subsequently displays the determined location of the object 402 on the photograph by a screen 410.

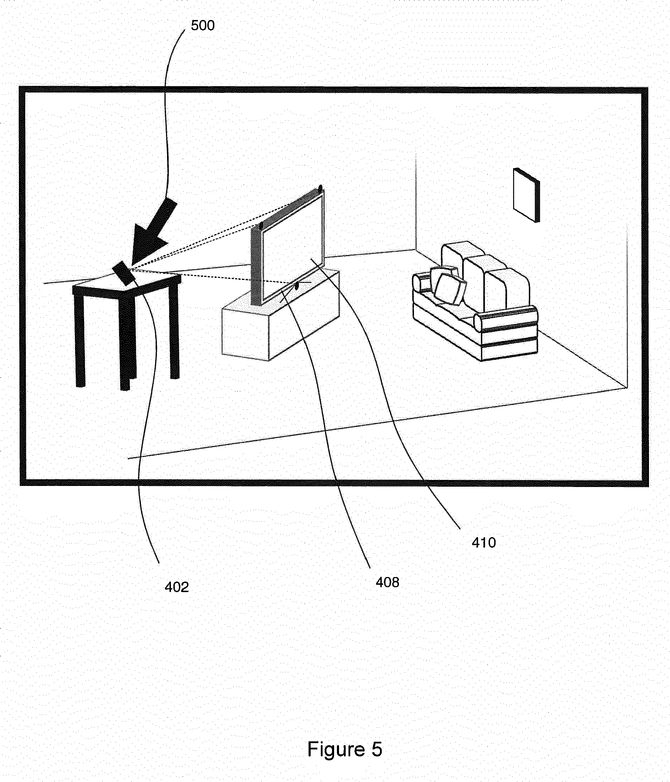

Figure 5 shows an example of a display provided by the screen 410 of Figure 4 to identify the location of the misplaced object 402. The screen 410 displays a photograph of the environment 400 in which the object 402 has been misplaced. The screen is arranged to display the photograph, alongside an indicator 500 for indicating where the missing object 402 is located in the environment 400. The indicator 500 is shown as an arrow. However, it may take another form, and optionally be animated.

In one example, a misplaced object may be arranged to receive a trigger signal in order to transmit a wireless signal to be received by a plurality of receivers. The trigger signal may come from an apparatus comprising at least of the plurality of receivers. Additionally or alternatively, the trigger signal may come from the apparatus comprising the processor and/or screen for displaying the location of the object. The trigger signal may be provided by another device. In one example, a trigger signal may be provided by an electronic tablet or a smartphone or the like. In any of these examples, the user may operate the trigger device to send a trigger signal for receipt by the misplaced object. The trigger device may display a number of items or objects which the user has previously registered with the trigger device. The user may then select from a menu or other display a particular object that the user wishes to locate. The trigger signal may be sent using one or more wireless technologies to the misplaced object, such as WiFi, Bluetooth, ZigBee, etc.

On receipt of a trigger signal, the misplaced object transmits a signal for receipt by the plurality of signal receivers. This location signal from the misplaced object may be sent using one or more wireless technologies, such as WiFi, Bluetooth, ZigBee, etc. The signal may be received by the plurality of signal receivers using the same wireless technology or technologies. The receivers may be integrally provided with or otherwise in communication with apparatus that has a display screen, such as a smart television set. The smart television set or other apparatus subsequently displays on the screen a photograph of the environment in which the missing object is located, accompanied by an indication of the location on the photograph. The photograph may be taken by a camera that is found integrally within the smart television set or other such apparatus comprising a screen or externally but being arranged to communicate with the smart television set or other apparatus. As mentioned previously, the photograph(s) (or other form of representation of the environment) may be taken at various times. The photograph may be taken before any signal is received by the television set or other apparatus. Additionally or alternatively it make be taken once a signal has been received at the television set or other apparatus. In another example, the television set or other apparatus may be independently requested to take a photograph of the environment, optionally by another device.

When a screen is caused to display a representation of the environment with the indication of the location of an object, it may also display distance information of the misplaced device. The distance information may be calculated using the signals received by the receivers of the wireless signal. The distance information may indicate the location of the misplaced object relative at least one of the signal receivers. Additionally or alternatively, the distance information may be given relative to another reference point in the environment. The distance information may be display numerically on the screen at the same time as the representation of the environment and accompanying indication.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. An apparatus for displaying an image identifying the location of an object in an environment, the apparatus comprising:
a plurality of signal receivers for receiving a wireless signal transmitted by an object;
a display screen for displaying images; and
a processor, the processor being constructed and arranged to:
analyse the wireless signal received by the plurality of signal receivers to determine the location of the object in the environment; and
cause display on the screen of a representation of the environment with an indication of the location of the object in the environment.

2. An apparatus according to claim 1, the apparatus comprising at least three signal receivers.

3. An apparatus according to claim 1 or claim 2, wherein the processor is configured to cause display on the screen of distance information of the object from the screen.

4. An apparatus according to any of claims 1 to 3, the apparatus comprising data storage in which a photograph of the environment is stored for use as the representation of the environment.

5. An apparatus according to any of claims 1 to 4, the apparatus comprising a camera arranged to take at least one photograph of the environment for use as the representation of the environment.

6. An apparatus according to any of claims 1 to 5, comprising a transmitter arranged to transmit a trigger signal to a said object to cause said object to transmit the wireless signal for receipt by the plurality of receivers.

7. An apparatus according to any of claims 1 to 6, wherein the apparatus comprises a television set.

8. A method for displaying an image identifying the location of an object in an environment, the method comprising:
receiving, at a plurality of receivers, at least one wireless signal transmitted by an object;
analysing the wireless signal received by the plurality of signal receivers to determine the location of the object in the environment; and
displaying a representation of the environment with an indication of the location of the object in the environment.

9. A method according to claim 8, comprising displaying distance information of the object on a screen on which the representation of the environment is displayed from the screen.

10. A method according to claim 8 or claim 9, comprising storing a photograph of the environment for use as the representation of the environment.

11. A method according to any of claims 8 to 10, comprising taking at least one photograph of the environment for use as the representation of the environment, the photograph being taken at a time of at least one of when the apparatus is set up, a request is received to locate an object, or a wireless signal is received by the plurality of signal receivers.

12. A method according to any of claims 8 to 11, comprising transmitting a trigger signal to the object, the trigger signal causing the object to transmit the wireless signal.

13. A method according to any of claims 8 to 12, the method being carried out by an apparatus comprising a television set.
